# EUROPÄISCHE PATENTSCHRIFT

(11) **EP 2 279 603 B1**
(45) Veröffentlichungstag und Bekanntmachung des Hinweises auf die Patenterteilung: **26.10.2011**
(21) Anmeldenummer: 08758787.9
(22) Anmeldetag: 27.05.2008
(51) Int. Cl.: H04L 29/12

(54) **Vorrichtung und Verfahren zur Neuverhandlung einer Multimediaverbindung sowie zugehöriges Kommunikationssystem, digitales Speichermedium, Computer-Programm-Produkt und Computerprogramm**
Apparatus and method for renegotiating a multimedia connection as well as associated communication system, digital storage medium, computer program product and computer program
Dispositif et procédé pour retraiter une liaison multimédia ainsi que système de communication associé, support de mémoire numérique, produit de programme informatique et programme informatique

(43) Veröffentlichungstag der Anmeldung: 02.02.2011
(73) Patentinhaber: Gigaset Communications GmbH, 81379 München (DE)
(72) Erfinder: LENFORT, Christoph, 46399 Bocholt (DE); SCHULZE, Norbert, 46395 Bocholt (DE)
(74) Vertreter: Michalski Hüttermann & Partner Patentanwälte
(86) Internationale Anmeldenummer: PCT/EP2008/004202
(87) Internationale Veröffentlichungsnummer: WO 2009/143859

(56) Entgegenhaltungen:
- US-A1- 2005 044 247
- SIPPING WG J ROSENBERG DYNAMICSOFT R MAHY CISCO S SEN NORTEL: "NAT and Firewall Scenarios and Solutions for SIP; draft-ietf-sipping-nat-scenarios-00.txt" IETF STANDARD-WORKING-DRAFT, INTERNET ENGINEERING TASK FORCE, IETF, CH, Bd. sipping, 24. Juni 2002 (2002-06-24), XP015003441 ISSN: 0000-0004
- BOULTON C ET AL: "Best Current Practices for NAT Traversal for SIP; draft-ietf-sipping-nat-scenarios-08.txt" IETF STANDARD-WORKING-DRAFT, INTERNET ENGINEERING TASK FORCE, IETF, CH, Bd. sipping, Nr. 8, 25. April 2008 (2008-04-25), XP015056378 ISSN: 0000-0004

## Beschreibung

Ein Weitverkehrs-Netzwerk, in der Fachwelt auch als Wide Area Network (WAN) bekannt und nachfolgend als öffentliches Netz bezeichnet, erstreckt sich über einen größeren geografischen Bereich, in dem lokale Netze, in der Fachwelt als Local Area Network (LAN) bekannt und nachfolgend als privates Netzwerk bezeichnet, miteinander vernetzt sind. Hierbei ist ferner zumindest ein Internetzugang vorgesehen. Lokale Netze (LAN) sind überwiegend als Busnetze, wie beispielsweise durch Ethernet realisiert. Als Verbindungselemente zwischen den lokalen Netzen (LAN) sind Zwischensysteme, wie Router und Bridges, angeordnet. Endgeräte in derartigen Weitverkehrs-Netzwerken (WAN) sind insbesondere paketorientierte Endgeräte, wie Rechner, Personalcomputer oder IP-Telefone. Für die Adressierung im Weitverkehrs-Netzwerk (WAN) werden vorzugsweise paketorientierte Adressen, wie z.B. IP-Adressen gemäß IPv4 oder IPv6 (Internet Protokoll Version 4 oder 6) verwendet.

Insbesondere für paketorientierte Sprachverbindungen über sogenannte VoIP-Telefone (Voice over IP) ist in Weitverkehrs-Netzwerken (WAN) mit Internetprotokoll vorwiegend das SIP-Protokoll (Session Initiation Protocol) vorgesehen. Das SIP-Protokoll wurde im Hinblick auf das Internet entwickelt und orientiert sich an der Architektur gängiger Internetanwendungen. Dabei stand leichte Implementierbarkeit, Skalierbarkeit, Erweiterbarkeit und Flexibilität im Vordergrund. Das SIP-Protokoll kann benutzt werden, um beliebige Sessions bzw. Kommunikationsbeziehungen mit einem oder mehreren Teilnehmern zu verwalten. Dabei ist es nicht auf Internet-Telefonie beschränkt, sondern Sessions können auch beliebige Multimediaströme, Konferenzen, Computerspiele usw. sein. Das SIP-Protokoll stellt ein Transportprotokoll für eine Multimediastrom-Beschreibung dar, wobei beispielsweise in einem SDP (Session Description Protocol) die Multimediastrom-Beschreibung behandelt wird. Das SDP ist für die Verwaltung von Kommunikationssitzungen vorgesehen und wird beispielsweise zusammen mit dem SIP-Protokoll eingesetzt. Bei Multimediaverbindungen ist beispielsweise als Transportprotokoll für die Multimediainformation (MMI, Multimedia Information) das sogenannte RTP (Real Time Protocol) vorgesehen.

Zum Aufbau einer Sprachverbindung verhandeln zwei IP-Telefone üblicherweise durch Austausch einer Angebotsmitteilung (Offer) und einer Antwortmitteilung (Answer) unter Nutzung des Signalisierungsprotokolls, z.B. SDP (Session Description Protocol), transportiert durch SIP (Session Initiation Protocol) eine Multimediaverbindung, wie z.B. eine RTP-Verbindung (Real Time Protocol). In diesem Signalisierungsprotokoll zur Verhandlung der Eigenschaften der Multimediaverbindung tragen die Endgeräte bzw. IP-Telefone als Zieladressierung für die zu empfangenden Multimediadaten jeweils ihre öffentlichen Netzadressen (z.B. IP-basierten WAN-Adressen) und ihren WAN-seitig verwendeten Port ein, die ihnen ein jeweiliger Netzwerkadressübersetzer bzw. NAT (Network Address Translation) in den ihnen vorgelagerten Routern zugeteilt hat. Eine Multimediaverbindung kommt zu Stande, indem jedes Endgerät bzw. IP-Telefon dann die Multimediadaten (MMI, Multimedia Information) an die WAN-Adresse und den WAN-Port des jeweils anderen IP-Telefons schickt. Relativ häufig kommt die Multimediaverbindung aber auch nicht zu Stande, wenn eines der IP-Telefone hinter einem Router mit Netzwerkadressübersetzung (NAT, Network Address Translation) angeschlossen ist und die WAN-IP-Adresse oder häufiger den WAN-Port nicht korrekt angeben kann. Typisches Fehlerbild sind fehlende oder halbseitige Sprachwege.

Zur Vermeidung dieses Problems wurden üblicherweise verschiedene Verfahren angewendet.

Das am meisten verbreitete Verfahren die WAN-IP-Adresse und den WAN-Port zu ermitteln ist das sogenannte STUN (Simple Traversal of UDP through NAT) nach RFC3489. Leider funktioniert dieses herkömmliche STUN-Verfahren nicht in allen Fällen und insbesondere dann nicht, wenn beispielsweise ein sogenannter symmetrischer NAT (Network Address Translation) verwendet wird.

Ferner ist in manchen Routern zusätzlich zur Netzwerkadressübersetzung (NAT) ein sogenannter Application Layer Gateway (ALG) implementiert, welches die Auswirkungen des Netzwerkadressübersetzers (NAT) auf die Application Layer-Protokolle, z.B. SIP und SDP, korrigiert. Sind WAN-Adressen oder WAN-Ports in einem ausgehenden Application Layer-Protokoll, z.B. SIP oder SDP, falsch, so kann ein entsprechendes Application Layer Gateway (ALG) das Protokoll entsprechend korrigieren.

Schließlich besteht noch die Möglichkeit eines sogenannten RTP-Proxys bzw. Vermittlers. Stellt hierbei ein SIP-Netzwerk fest, dass eines der IP-Telefone offensichtlich eine WAN-Adresse oder einen WAN-Port im SIP- oder SDP-Protokoll nicht korrekt angegeben hat, so kann es das SDP-Protokoll so verändern, dass beide IP-Telefone die Multimediadaten zu einem RTP-Proxy des Dienstanbieters (Providers) senden sollen. Der RTP-Proxy (Vermittler), der dann von beiden IP-Telefonen die Multimediadaten (MMI) erhält, kann diese dann an das jeweils andere IP-Telefon zurücksenden, ohne auf die WAN-Adresse und den WAN-Port aus dem ursprünglichen SDP-Protokoll angewiesen zu sein.

Nachteilig bei den letztgenannten beiden herkömmlichen Verfahren ist, dass es mitunter nicht offensichtlich ist, dass die WAN-Adresse oder der WAN-Port in den SIP- oder SDP-Daten falsch ist, also eine Korrektur oder die Einbindung eines RTP-Proxys nötig ist.

Ein weiterer Stand der Technik ist in US2005/044247 A1 Offenbart.

Der Erfindung liegt daher die Aufgabe zugrunde, eine Vorrichtung und ein Verfahren zur Neuverhandlung einer Multimediaverbindung sowie ein zugehöriges Kommunikationssystem, ein digitales Speichermedium, ein Computer-Programm-Produkt und ein Computerprogramm zu schaffen, mit dem eine funktionierende Multimediaverbindung zuverlässig realisiert werden kann.

Erfindungsgemäß wird diese Aufgabe hinsichtlich des Verfahrens durch die Maßnahmen des Patentanspruchs 1, hinsichtlich der Vorrichtung durch die Merkmale des Patentanspruchs 9, hinsichtlich des Kommunikationssystems durch die Merkmale des Patentanspruchs 18, hinsichtlich des digitalen Speichermediums durch die Merkmale des Patentanspruchs 19, hinsichtlich des Computer-Programm-Produkts durch die Merkmale des Patentanspruchs 20 und hinsichtlich des Computerprogramms durch die Merkmale des Patentanspruchs 21 gelöst.

Insbesondere kann zunächst eine erste Signalisierung durchgeführt werden, wobei in einem Signalisierungsabschnitt jeweils eine öffentliche Netzadresse und eine öffentliche Portadresse ausgetauscht werden. Ferner kann eine vorbestimmte Wartezeit gesetzt und ein Multimediaverbindungsaufbau erfasst werden. Wird hierbei innerhalb der vorbestimmten Wartezeit keine Multimediaverbindung aufgebaut, so kann eine zweite Signalisierung unter Verwendung von zumindest einer privaten Netzadresse durchgeführt werden. Aufgrund dieser offensichtlich unzureichenden lokalen Adressierung für ein Weitverkehrsnetz, werden zuverlässig die in einem Application Layer Gateway oder einem RTP-Proxy vorliegenden Korrigiereinheiten derart angesteuert, dass sie korrigierend in die offensichtlich unzureichende Adressierung eingreifen können.

Vorzugsweise kann bei der zweiten Signalisierung ferner eine private Portadresse verwendet werden. Bei Verwendung eines Application Layer Gateways kann dadurch eine Korrektur weiter verbessert werden.

Beispielsweise kann die erste Signalisierung eine Angebotsmitteilung und eine Antwortmitteilung umfassen, wobei die Wartezeit erst in Abhängigkeit von der eingetroffenen Antwortmitteilung gesetzt wird. Auf diese Weise kann eine Zuverlässigkeit des Systems weiter erhöht werden.

Beispielsweise können die Signalisierungen mit Hilfe des SIP-Protokolls, eine Multimediastrom-Beschreibung mit Hilfe des SDP-Protokolls und ein Informationstransport mit Hilfe des RTP-Protokolls durchgeführt werden. Alternativ können die Signalisierungen jedoch auch mit Hilfe des H.323-Protokolls durchgeführt werden. Auf diese Weise werden die im Internet gängigen Protokolle weitgehend unterstützt.

In den weiteren Ansprüchen sind weitere vorteilhafte Ausgestaltungen der Erfindung gekennzeichnet.

Die Erfindung wird nachfolgend anhand von Ausführungsbeispielen unter Bezugnahme auf die Zeichnung näher beschrieben.

Es zeigen:
- Fig. 1: eine vereinfachte Blockdarstellung einer Vorrichtung zur Neuverhandlung einer Multimediaverbindung;
- Fig. 2: ein vereinfachtes Zustandsdiagramm zur Veranschaulichung von Verfahrensschritten eines Verfahrens zur Neuverhandlung einer Multimediaverbindung gemäß einem ersten Ausführungsbeispiel; und
- Fig. 3: ein vereinfachtes Zustandsdiagramm zur Veranschaulichung von Verfahrensschritten eines Verfahrens zur Neuverhandlung einer Multimediaverbindung gemäß einem zweiten Ausführungsbeispiel.

Die vorliegende Erfindung beruht darauf, dass beispielsweise IP-basierte Endgeräte und insbesondere IP-Telefone zunächst versuchen, eine korrekte Adressierung im öffentlichen Netz innerhalb des SDP-Protokolls anzugeben.

Das öffentliche Netz ist beispielsweise ein Weitverkehrs-Netzwerk (WAN, Wide Area Network). Eine derartige korrekte WAN-Adressierung umfasst demzufolge eine korrekte IP-WAN-Netzadresse mit zugehörigem WAN-Port. Erkennt beispielsweise eines der Endgeräte nach Aufbau der Signalisierungsverbindung, dass auch nach einer gewissen Wartezeit keine Multimediaverbindung aufgebaut werden konnte, z.B. keine RTP-Daten eintreffen, so schickt es selbst eine Angebotmitteilung (Offer) ab, um die Multimediaverbindung neu zu verhandeln, also zu verändern. Dieses Mal trägt es aber bewusst eine offensichtlich unzureichende Adressierung im SDP-Protokoll ein, damit es für ein Application Layer Gateway (ALG) oder ein RTP-Proxy des Netzanbieters (Providers) offensichtlich ist, dass es nötig ist, korrigierend einzugreifen.

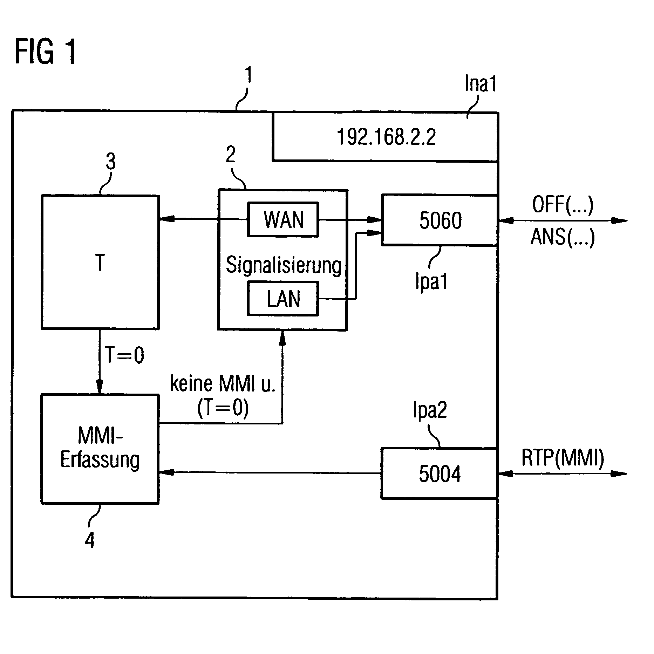

Figur 1 zeigt eine vereinfachte Blockdarstellung einer Vorrichtung zur Neuverhandlung einer Multimediaverbindung, wie sie beispielsweise in einem derartigen IP-basierten Endgerät und insbesondere in einem IP-Telefon implementiert sein kann.

Das Endgerät 1 besitzt gemäß Figur 1 beispielsweise die private Netzadresse bzw. lokale Netzadresse Inal = 192.168.2.2. Ferner weist es die privaten Ports bzw. lokalen Portadressen lpa1 = 5060 und lpa2 = 5004 auf, welche beispielsweise für eine Signalisierung sowie für einen Datentransport bereitgestellt werden können. Die Multimediaverbindung bzw. die Übertragung der Multimediadaten (MMI, Multimedia Information) kann beispielsweise über das RTP-Protokoll (Real Time Protocol) durchgeführt werden. Die Signalisierung kann beispielsweise mit Hilfe des SIP-Protokolls (Session Initiation Protocol), eine Multimediastrom-Beschreibung mit Hilfe des SDP-Protokolls (Session Description Protocol) durchgeführt werden, wobei ein Signalisierungsabschnitt Angebotmitteilungen (Offer, OFF) und Antwortmitteilungen (Answer, ANS) aufweisen kann.

Gemäß Figur 1 kann eine Signalisierungseinheit 2 zum Durchführen einer ersten Signalisierung vorgesehen sein, wobei in einem zugehörigen ersten Signalisierungsabschnitt jeweils eine öffentliche Netzadresse und eine öffentliche Portadresse ausgetauscht werden. Diese erste Signalisierung stellt somit eine Aushandlung einer Multimediaverbindung mit einer bestmöglich bekannten Weitverkehrsnetz-Adressierung (WAN-Adressierung) dar. Ferner kann gemäß Figur 1 eine Zeitgebereinheit 3 zum Setzen einer vorbestimmten Wartezeit T für einen Multimediaverbindungsaufbau vorgesehen sein. Das Setzen der vorbestimmten Wartezeit T kann durch die Signalisierungseinheit 2 angesteuert bzw. getriggert werden. Vorzugsweise kann die Zeitgebereinheit 3 in Abhängigkeit vom Eintreffen einer Antwortmitteilung ANS am lokalen Port Ipa1 = 5060 angesteuert werden, wodurch die für die Signalisierungsantwort ANS verstreichende Zeit unberücksichtigt bleibt. Die Zuverlässigkeit des Systems kann dadurch verbessert werden.

Ferner kann gemäß Figur 1 eine Erfassungseinheit 4 zum Erfassen einer aufgebauten Multimediaverbindung vorgesehen sein, wobei beispielsweise der lokale Port lpa2 = 5004 hinsichtlich eingehender RTP-Daten überwacht werden kann. Wenn nunmehr innerhalb der vorbestimmten Wartezeit r keine Multimediaverbindung aufgebaut werden konnte, so kann die Erfassungseinheit 4 die Signalisierungseinheit 2 derart ansteuern, dass eine zweite Signalisierung mit einer offensichtlich unzureichenden Netzadresse durchgeführt wird. Genauer gesagt kann die Erfassungseinheit 4 nach Ablauf der eingestellten Wartezeit (T = 0) und bei ausbleibenden RTP-Daten am Port 5004 die Signalisierungseinheit 2 derart ansteuern, dass zumindest die private bzw. lokale Netzadresse lna1 = 192.168.2.2 als Weitverkehrsnetz-Adressierung im Signalisierungsabschnitt ausgegeben wird. Eine derartige falsche Adressierung kann von den eingangs beschriebenen bereits existierenden Systemen, wie beispielsweise Application Layer Gateway (ALG) und RTP-Proxy zuverlässig erkannt und korrigiert werden, weshalb unter Verwendung der entsprechenden Korrekturverfahren eine funktionierende Multimediaverbindung aufgebaut werden kann.

Vorzugsweise wird neben der eigenen lokalen Netzadresse Ina1 = 192.168.2.2 ferner die eigene Daten-Portadresse lpa2 = 5004 im Signalisierungsabschnitt ausgegeben. Bei Verwendung eines Application Layer Gateways ALG kann dadurch eine Korrektur weiter verbessert werden. Die ausgegebene Portadresse = lpa2 ist hierbei eine Portadresse für den Datentransport über beispielsweise RTP (Real Time Protocol) bzw. für die Multimediaverbindung.

Alternativ zu der tatsächlichen eigenen lokalen Netzadresse lnal und der eigenen lokalen Portadresse für Datentransport lpa2 für ein jeweiliges Endgerät 1 können auch fiktive lokale Netzadressen Ina und fiktive lokale Portadressen lpa verwendet werden, welche zwar von den Endgeräte-Adressen verschieden sind aber zuverlässig als offensichtlich unzureichende Weitverkehrnetz-Adressen von den entsprechenden externen Einheiten, wie z.B. RTP-Proxy, erkannt werden.

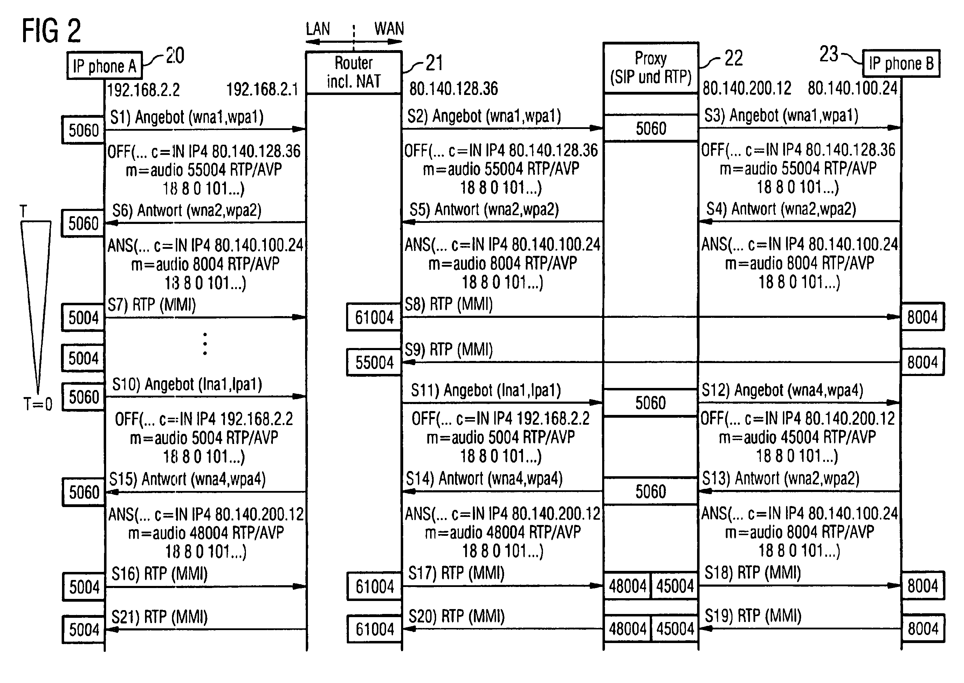

Figur 2 zeigt ein vereinfachtes Zustandsdiagramm zur Veranschaulichung von Verfahrensschritten des Verfahrens zur Neuverhandlung einer Multimediaverbindung gemäß einem ersten Ausführungsbeispiel, wobei gleiche Bezugszeichen bzw. Abkürzungen gleiche oder entsprechende Elemente bezeichnen wie in Figur 1 und auf eine wiederholte Beschreibung nachfolgend verzichtet wird.

Gemäß Figur 2 ist ein Kommunikationssystem dargestellt, welches aus einem IP-Telefon 20 besteht, welches sich in einem privaten bzw. lokalen Netzwerk LAN (Local Area Network) befindet. Das IP-basierte Endgerät 20 weist beispielsweise eine lokale Netzadresse lna1 = 192.168.2.2 auf. Zur Realisierung eines Zwischensystems zwischen dem lokalen Netzwerk LAN und einem öffentlichen bzw. Weitverkehrs-Netzwerk WAN (Wide Area Network) kann beispielsweise ein Router 21 verwendet werden, der einen Netzwerkadressübersetzer NAT (Network Address Translation) aufweist. Der Router 21 kann WAN-seitig die Weitverkehrsnetzwerk-Adresse wna1 = 80.140.128.36 und LANseiting beispielsweise eine lokale Netzadresse lna2 = 192.168.2.1 aufweisen.

Ferner kann sich im Kommunikationssystem gemäß Figur 2 ein Vermittler bzw. Proxy 22 befinden, welcher eine SIP (Session Initiation Protocol) und eine RTP (Real Time Transport Protocol) -Unterstützung aufweist. Der Proxy 22 besitzt beispielsweise die öffentliche bzw. Weitverkehrs-Netzadresse wna4 = 80.140.200.12 und besitzt einen WAN-Port 5060. Ferner ist in Figur 2 ein weiteres IP-basiertes Endgerät 23 dargestellt, welches wiederum vorzugsweise ein IP-Telefon darstellt. Das IP-Telefon 23 kann beispielsweise die öffentliche bzw. Weitverkehrs-Netzwerkadresse 80.140.100.24 aufweisen und wiederum auch in einem lokalen Netz (nicht dargestellt) angeordnet sein.

Gemäß Figur 2 kann zunächst eine erste Signalisierung mit einer bestmöglich bekannten öffentlichen bzw. WAN-Adressierung vorgenommen. Genauer gesagt kann im Schritt S1 vom Port 5060 des Endgeräts 20 im lokalen Netz LAN eine Angebotsmitteilung mit einer öffentlichen Netzadresse wna1 und einer öffentlichen Portadresse wpa1 an den Router 21 ausgegeben werden. Beispielsweise kann die Angebotsmitteilung in einem Signalisierungsabschnitt OFF (... c = IN IP4 80.140.128.36 m=audio 55004 RTP/AVP 18 8 0 1001 ...) aufweisen. In einem Schritt S2 kann diese Angebotsmitteilung vom Router 21 entsprechend an den Proxy 22 bzw. dessen Port 5060 weitergeleitet und von dort in einem Schritt S3 an das Endgerät bzw. IP-Telefon 23 gesendet werden. In einem Schritt S4 kann daraufhin vom Endgerät bzw. IP-Telefon 23 eine Antwortmitteilung mit einer entsprechenden öffentlichen Netzadresse wna2 und einer zugehörigen öffentlichen Portadresse wpa2 ausgegeben und zunächst an den Proxy 22 gesendet werden. Die mit der Antwortmitteilung ausgegebene Weitverkehrs-Netzadresse wna2 entspricht hierbei der Netzadresse des IP-Telefons 23, wobei der zugehörige Port wpa2 ein für das Weitverkehrsnetz übliche Datenport des Endgeräts 23 darstellt (in Beispiel wpa2 = 8004). Eine entsprechende Antwortmitteilung kann demzufolge im Signalisierungsabschnitt ANS (... c = IN IP4 80.140.100.24 m=audio 8004 RTP/AVP 18 8 0 101 ...) aufweisen. Diese Antwortmitteilung kann in einem Schritt S5 weiter vom Proxy 22 an den Router 21 zurückgegeben und von dort an das IP-Telefon 20 gesendet werden, wodurch beide Endgeräte die für die Multimediaverbindung zu verwendenden Adressdaten besitzen.

In einem Schritt S7 kann gemäß Figur 2 nunmehr eine RTP-Datenverbindung zum Austausch einer Multimediainformation (MMI) zunächst an den Router 21 ausgegeben und von dort über das Port 61004 an das bei der Signalisierung angegebene Port 8004 des Endgeräts 23 gesendet werden. Das IP-Telefon 23 sendet in einem Schritt S9 seinerseits über die RTP-Verbindung an die ihm zur Verfügung gestellte Portadresse 55004, die jedoch nicht die tatsächliche Portadresse des eigentlichen IP-Telefons 20 darstellt, weshalb dort kein RTP-Datenempfang bzw. kein Multimedia-Verbindungsaufbau erfasst werden kann. Dieser Vorgang kann so oft wiederholt werden, bis RTP-Daten empfangen werden oder die Wartezeit abgelaufen ist.

Gemäß Figur 2 wird beispielsweise mit dem Empfangen der Antwortmitteilung ANS im Schritt S6 die Wartezeit T gestartet und solange ein Aufbau einer Multimediaverbindung durch Aussenden von RTP-Daten durchgeführt, bis die Wartezeit abgelaufen ist, d.h. T = 0.

Nach Ablauf der Wartezeit (T = 0) kann in einem Schritt S10 nunmehr eine offensichtlich unzureichende Adressierung in der Angebotmitteilung OFF an den Router 21 gesendet werden. Genauer gesagt kann in dem Signalisierungsabschnitt eine lokale Netzadresse lna1 und eine lokale Portadresse lpa1 des Endgeräts 20 an den Router 21 gesendet werden. Der Signalisierungsabschnitt umfasst demzufolge OFF (... c = IN IP4 192.168.2.2 m=audio 5004 RTP/AVP 18 8 0 101 ...). Diese Angebotmitteilung kann in einem Schritt S11 vom Router 21 an den Proxy 22 weitergeleitet werden, dessen RTP-Proxy diese lokale Adressierung als offensichtlich unzureichende Adressierung zuverlässig erkennen kann und seinerseits eine übliche Korrektur-Prozedur anwendet. Genauer gesagt wird nunmehr in einem Schritt S12 vom Proxy 22 eine Angebotmitteilung mit einer veränderten öffentlichen bzw. Weitverkehrs-Netzadresse wna4 mit zugehöriger Portadresse wpa4 an das IP-Endgerät 23 gesendet, welche der öffentlichen Netzadresse des Proxys 22 sowie seiner öffentlichen Portadresse entspricht. Die korrigierte Angebotmitteilung kann beispielsweise einen Signalisierungsabschnitt OFF (... c = IN IP4 80.140.200.12 m=audio 45004 RTP/AVP 18 8 0 101 ...) umfassen. Aufgrund dieser korrigierten Angebotmitteilung kann nunmehr das Endgerät 23 seine Antwortmitteilung wiederum mit seiner eigenen öffentlichen Netzadresse und seinem zugehörigen öffentlichen Port an den Proxy 22 weiterleiten, welcher seinerseits eine Rückkorrektur der Adressen in einem Schritt S14 zum Router 21 hin durchführt und dieser in einem Schritt S15 die Antwortmitteilung bis zum IP-Endgerät 20 weiterleitet.

Daraufhin kann in einem Schritt S16 das Endgerät 20 eine RTP-Datenverbindung zum Router 21 hin und von dort in einem Schritt S17 zum Proxy 22 und von dort zum IP-Telefon 23 in einem Schritt S18 aufgebaut und in umgekehrter Richtung in einem Schritt S19 zum Proxy 22 in einem Schritt S20 zum Router 21 und in einem Schritt S21 zum IP-Telefon 20 aufgebaut werden. Die Multimediaverbindung kann damit zuverlässig unter Verwendung des im Proxy 22 vorhandenen Korrekturverfahrens zuverlässig aufgebaut werden.

Obwohl vorstehend sowohl die lokale Netzadresse als auch die lokale Portadresse bei der zweiten Signalisierung ausgegeben wird, ist es grundsätzlich auch ausreichend lediglich eine lokale Netzadresse auszugeben, um eine zuverlässige Korrektur im Proxy 22 zu gewährleisten.

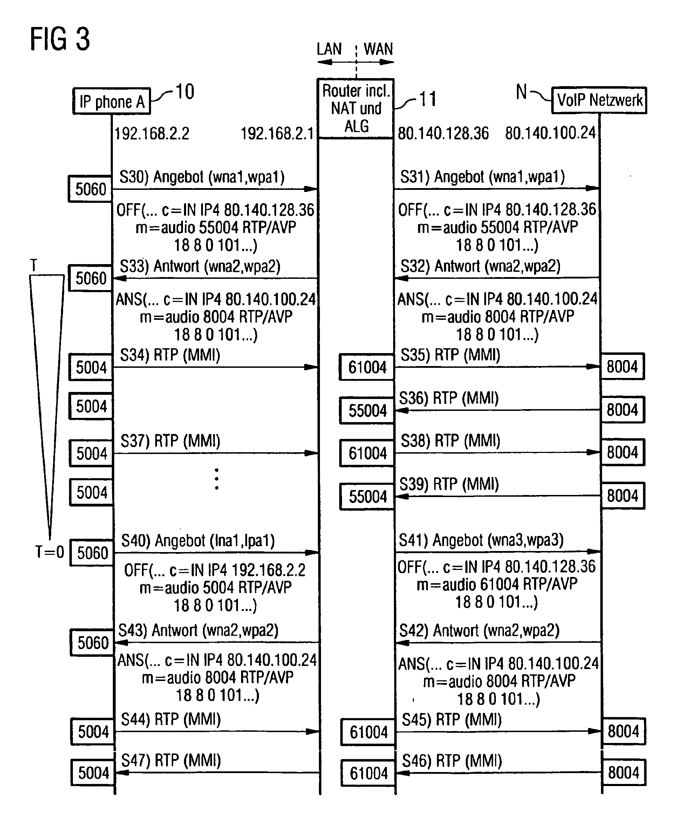

Figur 3 ist ein vereinfachtes Zustandsdiagramm zur Veranschaulichung von Schritten des Verfahrens zur Neuverhandlung einer Multimediaverbindung gemäß einem zweiten Ausführungsbeispiel, wobei gleiche Bezugszeichen gleiche oder entsprechende Elemente wie in Figur 2 bezeichnen, weshalb auf eine wiederholte Beschreibung nachfolgend verzichtet wird.

Gemäß Figur 3 weist das Kommunikationssystem keinen Proxy mit RTP-Proxy-Korrekturverfahren auf, sondern einen Router 11, welcher neben dem Netzwerkadressübersetzer NAT (Network Address Translation) ein Application Layer Gateway ALG mit entsprechender Korrekturfunktion aufweist. Wiederum wird auf die Korrekturfunktion des ALG nachfolgend nicht weiter eingegangen, da sie bereits als Stand der Technik wie beim vorstehend beschriebenen RTP-Proxy bekannt ist.

Ferner ist in Figur 3 kein weiteres IP-Endgerät dargestellt, sondern lediglich ein VoIP-Netzwerk N mit seiner öffentlichen Netzadresse 80.140.100.24 dargestellt, hinter dem sich beispielsweise ein (nicht dargestelltes) weiteres IP-Telefon verbergen kann oder aber eine Multimediaverbindung im Sinne von Multimediaströmen, Konferenzen oder Computerspielen realisiert werden kann. Wiederum wird in den Schritten S30 bis S33 eine erste Signalisierung durchgeführt, wobei in einem Signalisierungsabschnitt jeweils eine bestmögliche öffentliche Netzadresse wna1 und eine öffentliche Portadresse wpa1 ausgetauscht werden. Genauer gesagt kann in einem Schritt S30 ähnlich zu Figur 2 eine Angebotmitteilung an den Router 11 ausgegeben werden, der diese Angebotmitteilung in einem Schritt S31 an das Netzwerk N im Weitverkehrsnetz WAN weiterleitet. Das Netzwerk N beantwortet diese Angebotmitteilung in einem Schritt S32 mit einer Antwortmitteilung, welche die öffentliche Netzadresse wna2 = 80.140.100.24 des Netzwerks N sowie den zugehörigen Port 8004 für eine Datenverbindung angibt. Diese Antwortmitteilung kann in einem Schritt S33 vom Router 11 an das Endgerät 10 bzw. dessen Port 5060 weitergeleitet werden. Wiederum kann bei Empfang dieser Antwortmitteilung die vorbestimmte Wartezeit T gestartet werden und in einem Schritt S34 der Aufbau einer Multimediaverbindung begonnen werden.

Da die Adressierung nicht korrekt ist, werden in einem Schritt S35 zwar die RTP-Daten an das Netzwerk N bzw. dessen Port 8004 weitergegeben, jedoch werden die im Schritt S36 zurückgesendeten RTP-Daten bzw. Multimediainformationen (MMI) nur bis zum Router 11 übertragen und nicht an das Endgerät 10 weitergeleitet. Das Endgerät 10 kann diesen Vorgang in einem Schritt S37 solange wiederholen bis die Wartezeit abgelaufen ist, d.h. T = 0. In gleicher Weise können vom Router 11 die RTP-Daten in einem Schritt S38 an das Netzwerk N weitergeleitet werden und das Netzwerk N versucht weiterhin, in einem Schritt S39 die Daten an den mitgeteilten Port 55004 zurückzusenden.

Nach Ablauf der Wartezeit, d.h. T = 0, wird wiederum eine zweite Signalisierung unter Verwendung einer offensichtlich unzureichenden Netzadresse, d.h. der lokalen bzw. privaten Netzadresse lna1 und der lokalen bzw. privaten Portadresse lpa1 des Endgerätes 10 an den Router 11 gesendet, dessen Application Layer Gateway ALG nunmehr jedoch die offensichtlich unzureichende Adressierung erkennt und ihrerseits eine korrigierte Adressierung in einem Schritt S41 mit einer neuen öffentlichen Netzadresse wna3 und einer neuen öffentlichen Portadresse wpa3 an das Netzwerk N sendet. Die neue WAN-Netzadresse und WAN-Portadresse ist hierbei die Netzadresse (80.140.128.36) und Portadresse (61004) des Routers 11.

In einem Schritt S42 sendet das Netzwerk N seinerseits eine Antwortmitteilung mit seiner öffentlichen Netzadresse wna2 und seiner öffentlichen Portadresse wpa2 an den Router 11, der diese Mitteilung in einem Schritt S43 an das IP-Endgerät 10 bzw. dessen Port 5060 weiterleitet.

Auf der Grundlage dieser Signalisierungsdaten kann nunmehr in einem Schritt S44 bis S46 eine Multimediaverbindung aufgebaut werden, wobei der Port 61004 des Routers 11 zur Korrektur für die RTP-Datenverbindung verwendet wird. Wiederum können durch offensichtlich unzureichende Adressierungen die in einem Router mit Application Layer Gateway ALG existierenden herkömmlichen Korrekturprozeduren aktiviert werden, wodurch eine Zuverlässigkeit für eine IP-Multimediaverbindung erhöht wird.

Obwohl auch in Figur 3 sowohl eine lokale Netzadresse als auch eine lokale Portadresse bei der zweiten Signalisierung verwendet wird, kann grundsätzlich auch nur eine private bzw. lokale Netzadresse bei der zweiten Signalisierung ausgegeben werden. Bei Verwendung eines Application Layer Gateways kann insbesondere mit der zusätzlichen lokalen Portadresse eine Korrektur weiter verbessert werden. Ferner kann die Wartezeit T bereits mit Absenden der Angebotmitteilung im Schritt S30 gestartet werden, wodurch sich jedoch eine zeitliche Verzögerung für eine am Endgerät 10 eingehende Antwortmitteilung bemerkbar machen kann. Für die Übertragung der Multimediainformationen (MMI) bzw. der Sprachinformationen wird üblicherweise das weit verbreitete RTP-Protokoll (Real Time Protocol) eingesetzt, wobei das RTP-Protokoll auch zusammen mit dem H.323-Protokoll eingesetzt werden kann.

Zur Unterscheidung der Medien unterscheidet das RTP-Protokoll zwischen verschiedenen Codierungsformaten, so dass die übertragenen Daten anwendungsunabhängig verwendet werden können. Für diesen Zweck können verschiedene RTP-Profile für Audio und Video definiert werden. Das RTP-Protokoll ist folglich unabhängig von den darunter liegenden Protokollen, es wird in der Regel mit dem UDP-Protokoll (User Data Protocol) betrieben, wobei die RTP-Datenpakete in die UDP-Datenpakete eingefügt werden.

Die Erfindung wurde vorstehend anhand bevorzugter Ausführungsbeispiele und insbesondere anhand eines lokalen Netzes und eines Weitverkehrsnetzes beschrieben. Sie ist jedoch nicht darauf beschränkt und umfasst insbesondere auch zum SIP-Signalisierungsverfahren alternative Signalisierungsverfahren, wie beispielsweise H.323. Hierbei können die zutreffenden Protokollabschnitte wiederholt werden und in diese entsprechende lokale Netzadressen und lokale Portadressen eingefügt werden.

### Bezugszeichenliste

- 1, 10, 20, 23: IP-basiertes Endgerät
- 2: Signalisierungseinheit
- 3: Zeitgebereinheit
- 4: Erfassungseinheit
- 11: Router mit ALG
- 21: Router ohne ALG
- 22: Proxy mit RTP-Proxy
- N: IP-Netzwerk
- lna: lokale Netzadresse
- lpa: lokale Portadresse
- wna: Weitverkehrs-Netzadresse
- wpa: Weitverkehrs-Portadresse
- LAN: lokales Netz
- WAN: Weitverkehrsnetz
- T: Wartezeit

## Patentansprüche

1. Verfahren zur Neuverhandlung einer Multimediaverbindung in einem paketorientierten Kommunikationsnetzwerk, das ein privates Netz (LAN) und ein öffentliches Netz (WAN) aufweist, mit den Schritten:
Durchführen einer ersten Signalisierung, wobei in einem Signalisierungsabschnitt jeweils eine öffentliche Netzadresse (wna1, wna2) und eine öffentliche Portadresse (wpa1, wpa2) ausgetauscht werden;
Setzen einer vorbestimmten Wartezeit (T);
Erfassen eines Multimediaverbindungsaufbaus, wobei
eine zweite Signalisierung unter Verwendung von zumindest einer privaten Netzadresse (lna1) durchgeführt wird, wenn innerhalb der vorbestimmten Wartezeit (T=0) keine Multimediaverbindung aufgebaut werden konnte.

2. Verfahren nach Patentanspruch 1, wobei die zweite Signalisierung ferner unter Verwendung einer privaten Portadresse (lpa1) durchgeführt wird.

3. Verfahren nach Patentanspruch 2, wobei das private Netz ein lokales Netzwerk (LAN) aufweist und die zweite Signalisierung unter Verwendung der lokalen Netzadresse (lna1) und der lokalen Portadresse (lpa1) eines zugehörigen lokalen Endgeräts (10; 20) durchgeführt wird.

4. Verfahren nach einem der Patentansprüche 1 bis 3, wobei das öffentliche Netz ein Weitverkehrs-Netzwerk (WAN) darstellt.

5. Verfahren nach einem der Patentansprüche 1 bis 4, wobei die erste Signalisierung eine Angebotmitteilung (S1, S2, S3) sowie eine Antwortmitteilung (S4, S5, S6) aufweist und die Wartezeit (T) in Abhängigkeit von der Antwortmitteilung gesetzt wird.

6. Verfahren nach einem der Patentansprüche 1 bis 5, wobei die Signalisierungen mit Hilfe des SIP-Protokolls (SIP), eine Multimediastrom-Beschreibung mit Hilfe des SDP-Protokolls und
ein Informationstransport mit Hilfe des RTP-Protokolls (RTP) durchgeführt werden.

7. Verfahren nach einem der Patentansprüche 1 bis 5, wobei
die Signalisierungen mit Hilfe des H.323-Protokolls durchgeführt werden.

8. Verfahren nach einem der Patentansprüche 1 bis 7, wobei die öffentlichen Netzadressen (wna) und die privaten Netzadressen (lna) durch Internetadressen gebildet sind und eine öffentliche Portadresse (wpa) durch eine WAN-seitige Portadresse eines Routers (11; 21) und eine private Portadresse (lpa) durch eine Portadresse eines jeweiligen Endgeräts (10; 20) im privaten Netz (LAN) gebildet sind.

9. Vorrichtung zur Neuverhandlung einer Multimediaverbindung in einem paketorientierten Kommunikationsnetzwerk, das ein privates Netz (LAN) und ein öffentliches Netz (WAN) aufweist, mit:
einer Signalisierungseinheit (2) zum Durchführen einer ersten Signalisierung, wobei in einem Signalisierungsabschnitt jeweils eine öffentliche Netzadresse (wna1, wna2) und eine öffentliche Portadresse (wpa1, wpa2) ausgetauscht werden;
einer Zeitgebereinheit (3) zum Setzen einer vorbestimmten Wartezeit (T) für einen Multimediaverbindungsaufbau; und
einer Erfassungseinheit (4) zum Erfassen eines Multimediaverbindungsaufbaus, wobei
die Erfassungseinheit (4) die Signalisierungseinheit (2) zum Durchführen einer zweiten Signalisierung unter Verwendung von zumindest einer privaten Netzadresse (lnal) im Signalisierungsabschnitt ansteuert, wenn innerhalb der vorbestimmten Wartezeit (T) keine Multimediaverbindung aufgebaut werden konnte.

10. Vorrichtung nach Patentanspruch 9, **dadurch gekennzeichnet, dass** die Signalisierungseinheit (2) die zweite Signalisierung ferner unter Verwendung einer privaten Portadresse (lpa1) durchführt.

11. Vorrichtung nach Patentanspruch 9 oder 10, **dadurch gekennzeichnet, dass** das private Netz ein lokales Netzwerk (LAN) aufweist und die zweite Signalisierung unter Verwendung der lokalen Netzadresse (lna1) und der lokalen Portadresse eines zugehörigen lokalen Endgeräts (10; 20) durchgeführt wird.

12. Vorrichtung nach einem der Patentansprüche 9 bis 11, **dadurch gekennzeichnet, dass** das öffentliche Netz ein Weitverkehrs-Netzwerk (WAN) darstellt.

13. Vorrichtung nach einem der Patentansprüche 9 bis 12, **dadurch gekennzeichnet, dass** die Signalisierungseinheit (2) bei der ersten Signalisierung eine Angebotsmitteilung (OFF) sendet und eine Antwortmitteilung (ANS) empfängt, wobei die Zeitgebereinheit (3) in Abhängigkeit vom Eintreffen der Antwortmitteilung (ANS) angesteuert wird.

14. Vorrichtung nach einem der Patentansprüche 9 bis 13, **dadurch gekennzeichnet, dass**
die Signalisierungen mit Hilfe des SIP-Protokolls (SIP),
eine Multimediastrom-Beschreibung mit Hilfe des SDP-Protokolls (SDP), und
ein Informationstransport mit Hilfe des RTP-Protokolls (RTP) durchgeführt werden.

15. Vorrichtung nach einem der Patentansprüche 9 bis 13, **dadurch gekennzeichnet, dass** die Signalisierungen mit Hilfe des H.323-Protokolls durchgeführt werden.

16. Vorrichtung nach einem der Patentansprüche 9 bis 15, **dadurch gekennzeichnet, dass** die Signalisierungseinheit (2) als öffentliche Netzadressen (wna) und als private Netzadressen (lna) Internetadressen verwendet, und als öffentliche Portadresse (wpa) eine WAN-seitige Portadresse eines Routers (11; 21) und als private Portadresse (lpa) eine Portadresse eines jeweiligen Endgeräts (10; 20) im privaten Netz (LAN) verwendet.

17. Vorrichtung nach einem der Patentansprüche 9 bis 16, **dadurch gekennzeichnet, dass** sie in einem IP-Telefon (10; 20) implementiert ist.

18. Kommunikationssystem zum Durchführen des Verfahrens nach einem der Patentansprüche 1 bis 8.

19. Digitales Speichermedium mit elektrisch auslesbaren Steuersignalen, die so mit einem programmierbaren Computersystem zusammenwirken, dass ein Verfahren nach einem der Patentansprüche 1 bis 8 ausgeführt wird.

20. Computer-Programm-Produkt mit auf einem maschinenlesbaren Träger gespeichertem Programmcode zur Durchführung des Verfahrens nach einem der Patentansprüche 1 bis 8, wenn das Programmprodukt auf einem Computer abläuft.

21. Computerprogramm mit Programmcode zur Durchführung des Verfahrens nach einem der Patentansprüche 1 bis 8, wenn das Programm auf einem Computer abläuft.

## Claims

1. Method for renegotiating a multimedia connection in a packet-oriented communication network which has a private network (LAN) and a public network (WAN), having the following steps:
a first signalling operation is performed, wherein a public network address (wna1, wna2) and a public port address (wpa1, wpa2) are respectively interchanged in a signalling section;
a predetermined waiting time (T) is set;
multimedia connection setup is detected, wherein a second signalling operation is performed using at least one private network address (lna1) when it has not been possible to set up a multimedia connection within the predetermined waiting time (T = 0).

2. Method according to Patent Claim 1, wherein the second signalling is also performed using a private port address (lpa1).

3. Method according to Patent Claim 2, wherein the private network has a local area network (LAN) and the second signalling is performed using the local network address (lna1) and the local port address (lpa1) of an associated local terminal (10; 20).

4. Method according to one of Patent Claims 1 to 3, wherein the public network is a wide area network (WAN) .

5. Method according to one of Patent Claims 1 to 4, wherein the first signalling has an offer notification (S1, S2, S3) and a response notification (S4, S5, S6) and the waiting time (T) is set on the basis of the response notification.

6. Method according to one of Patent Claims 1 to 5, wherein the signalling operations are performed using the SIP protocol (SIP),
multimedia stream description is performed using the SDP protocol, and
information transportation is performed using the RTP protocol (RTP).

7. Method according to one of Patent Claims 1 to 5, wherein
the signalling operations are performed using the H.323 protocol.

8. Method according to one of Patent Claims 1 to 7, wherein the public network addresses (wna) and the private network addresses (lna) are formed by Internet addresses, and a public port address (wpa) is formed by a WAN-end port address for a router (11; 21) and a private port address (lpa) is formed by a port address for a respective terminal (10; 20) in the private network (LAN).

9. Apparatus for renegotiating a multimedia connection in a packet-oriented communication network which has a private network (LAN) and a public network (WAN), having:
a signalling unit (2) for performing a first signalling operation, wherein a public network address (wna1, wna2) and a public port address (wpa1, wpa2) are respectively interchanged in a signalling section;
a timer unit (3) for setting a predetermined waiting time (T) for multimedia connection set-up; and
a detection unit (4) for detecting multimedia connection set-up, wherein
the detection unit (4) actuates the signalling unit (2) to perform a second signalling operation using at least one private network address (lna1) in the signalling section when it has not been possible to set up a multimedia connection within the predetermined waiting time (T).

10. Apparatus according to Patent Claim 9, **characterized in that** the signalling unit (2) performs the second signalling also using a private port address (lpa1).

11. Apparatus according to Patent Claim 9 or 10, **characterized in that** the private network has a local area network (LAN) and the second signalling is performed using the local network address (lna1) and the local port address of an associated local terminal (10; 20).

12. Apparatus according to one of Patent Claims 9 to 11, **characterized in that** the public network is a wide area network (WAN).

13. Apparatus according to one of Patent Claims 9 to 12, **characterized in that** during the first signalling the signalling unit (2) sends an offer notification (OFF) and receives a response notification (ANS), wherein the timer unit (3) is actuated on the basis of the arrival of the response notification (ANS).

14. Apparatus according to one of Patent Claims 9 to 13, **characterized in that**
the signalling operations are performed using the SIP protocol (SIP),
multimedia stream description is performed using the SDP protocol (SDP), and
information transportation is performed using the RTP protocol (RTP).

15. Apparatus according to one of Patent Claims 9 to 13, **characterized in that** the signalling operations are performed using the H.323 protocol.

16. Apparatus according to one of Patent Claims 9 to 15, **characterized in that** the signalling unit (2) uses Internet addresses as public network addresses (wna) and as private network addresses (lna), and uses a WAN-end port address for a router (11; 21) as public port address (wpa) and a port address for a respective terminal (10; 20) in the private network (LAN) as private port address (lpa).

17. Apparatus according to one of Patent Claims 9 to 16, **characterized in that** it is implemented in an IP telephone (10; 20).

18. Communication system for carrying out the method according to one of Patent Claims 1 to 8.

19. Digital storage medium having electrically readable control signals which interact with the programmable computer system in such a way that a method according to one of Patent Claims 1 to 8 is carried out.

20. Computer program product having program code, stored on a machine-readable storage medium, for carrying out the method according to one of Patent Claims 1 to 8 when the program product is executed on a computer.

21. Computer program having program codes for carrying out the method according to one of Patent Claims 1 to 8 when the program is executed on a computer.

## Revendications

1. Procédé pour retraiter une liaison multimédia dans un réseau de communication par paquets qui comporte un réseau privé (LAN) et un réseau public (WAN), avec les étapes suivantes :
- mise en oeuvre d'une première signalisation, une adresse de réseau publique (wna1, wna2) et une adresse de port publique (wpa1, wpa2) étant échangées à chaque fois dans une section de signalisation ;
- affectation d'un temps d'attente prédéterminé (T) ;
- détection d'un établissement de liaison multimédia,
une seconde signalisation étant mise en oeuvre en utilisant au moins une adresse de réseau privée (lna1) si aucune liaison multimédia n'a pu être établie dans les limites du temps d'attente prédéterminé (T = 0).

2. Procédé selon la revendication 1, la seconde signalisation étant mise en oeuvre en plus en utilisant une adresse de port privée (lpa1).

3. Procédé selon la revendication 2, le réseau privé comportant un réseau local (LAN) et la seconde signalisation étant mise en oeuvre en utilisant l'adresse de réseau local (lna1) et l'adresse de port local (lpal) d'un terminal local (10; 20) associé.

4. Procédé selon l'une des revendications 1 à 3, le réseau public représentant un réseau à grande distance (WAN).

5. Procédé selon l'une des revendications 1 à 4, la première signalisation comportant une information d'offre (S1, S2, S3) ainsi qu'une information de réponse (S4, S5, S6) et le temps d'attente (T) étant affecté en fonction de l'information de réponse.

6. Procédé selon l'une des revendications 1 à 5,
- les signalisations étant mises en oeuvre à l'aide du protocole SIP (SIP),
- une description de flux multimédia étant mise en oeuvre à l'aide du protocole SDP, et
- un transport d'informations étant mis en oeuvre à l'aide du protocole RTP (RTP).

7. Procédé selon l'une des revendications 1 à 5, les signalisations étant mises en oeuvre à l'aide du protocole H.323.

8. Procédé selon l'une des revendications 1 à 7, les adresses de réseau publiques (wna) et les adresses de réseau privées (Ina) étant formées par des adresses Internet, une adresse de port publique (wpa) étant formée par une adresse de port côté WAN d'un routeur (11 ; 21) et une adresse de port privée (lpa) étant formée par une adresse de port d'un terminal respectif (10 ; 20) dans le réseau privé (LAN).

9. Dispositif pour retraiter une liaison multimédia dans un réseau de communication par paquets qui comporte un réseau privé (LAN) et un réseau public (WAN), avec :
- une unité de signalisation (2) pour mettre en oeuvre une première signalisation, une adresse de réseau publique (wna1, wna2) et une adresse de port publique (wpa1, wpa2) étant échangées à chaque fois dans une section de signalisation ;
- une horloge (3) pour affecter un temps d'attente prédéterminé (T) pour un établissement de liaison multimédia ; et
- une unité de détection (4) pour détecter un établissement de liaison multimédia,
l'unité de détection (4) commandant l'unité de signalisation (2) pour mettre en oeuvre une seconde signalisation en utilisant au moins une adresse de réseau privée (lna1) dans la section de signalisation si aucune liaison multimédia n'a pu être établie dans les limites du temps d'attente prédéterminé (T).

10. Dispositif selon la revendication 9, **caractérisé en ce que** l'unité de signalisation (2) met en oeuvre la seconde signalisation en plus en utilisant une adresse de port privée (lpal).

11. Dispositif selon la revendication 9 ou 10, **caractérisé en ce que** le réseau privé comporte un réseau local (LAN) et **en ce que** la seconde signalisation est mise en oeuvre en utilisant l'adresse de réseau local (lna1) et l'adresse de port local d'un terminal local (10 ; 20) associé.

12. Dispositif selon l'une des revendications 9 à 11, **caractérisé en ce que** le réseau public représente un réseau à grande distance (WAN).

13. Dispositif selon l'une des revendications 9 à 12, **caractérisé en ce que** l'unité de signalisation (2) émet lors de la première signalisation une information d'offre (OFF) et reçoit une information de réponse (ANS), l'horloge (3) étant commandée en fonction de l'arrivée de l'information de réponse (ANS).

14. Dispositif selon l'une des revendications 9 à 13, **caractérisé en ce que**
- les signalisations sont mises en oeuvre à l'aide du protocole SIP (SIP),
- une description de flux multimédia est mise en oeuvre à l'aide du protocole SDP, et
- un transport d'informations est mis en oeuvre à l'aide du protocole RTP (RTP).

15. Dispositif selon l'une des revendications 9 à 13, **caractérisé en ce que** les signalisations sont mises en oeuvre à l'aide du protocole H.323.

16. Dispositif selon l'une des revendications 9 à 15, **caractérisé en ce que** l'unité de signalisation (2) utilise des adresses Internet comme adresses de réseau publiques (wna) et comme adresses de réseau privées (lna), une adresse de port côté WAN d'un routeur (11 ; 21) comme adresse de port publique (wpa) et une adresse de port d'un terminal respectif (10 ; 20) dans le réseau privé (LAN) comme adresse de port privée (lpa).

17. Dispositif selon l'une des revendications 9 à 16, **caractérisé en ce qu'**il est installé dans un téléphone IP (10 ; 20).

18. Système de communication pour la mise en oeuvre du procédé selon l'une des revendications 1 à 8.

19. Support de mémoire numérique avec signaux de commande lisibles électriquement qui coopère avec un système informatique programmable de manière à mettre en oeuvre un procédé selon l'une des revendications 1 à 8.

20. Produit formant programme informatique avec un code de programme mémorisé sur un support lisible par une machine pour la mise en oeuvre du procédé selon l'une des revendications 1 à 8 lorsque le produit formant programme s'exécute sur un ordinateur.

21. Programme informatique avec code de programme pour la mise en oeuvre du procédé selon l'une des revendications 1 à 8 lorsque le programme s'exécute sur un ordinateur.
